## Europäisches Patentamt
## European Patent Office
## Office européen des brevets

(19)

(11) Veröffentlichungsnummer : **0 007 032**
**B1**

(12)

# EUROPÄISCHE PATENTSCHRIFT

(45) Veröffentlichungstag der Patentschrift :
30.03.83

(51) Int. Cl.³ : **C 09 D 3/72, C 08 G 18/80**

(21) Anmeldenummer : 79102119.9

(22) Anmeldetag : 26.06.79

(54) **Verwendung wässriger Dispersionen zur Herstellung von Überzügen mittels Spritzauftrag.**

(30) Priorität : 06.07.78 DE 2829648

(43) Veröffentlichungstag der Anmeldung :
23.01.80 Patentblatt 80/02

(45) Bekanntmachung des Hinweises auf die Patenterteilung : 30.03.83 Patentblatt 83/13

(84) Benannte Vertragsstaaten :
AT DE FR GB IT NL

(56) Entgegenhaltungen :
DE A 2 537 207
DE A 2 613 099
DE A 2 658 843
FR A 2 317 318

(73) Patentinhaber : BASF Aktiengesellschaft
Carl-Bosch-Strasse 38
D-6700 Ludwigshafen (DE)

(72) Erfinder : Kovacs, Jenoe, Dr. Chem.
Robert-Koch-Strasse
D-6712 Bobenheim-Roxheim 2 (DE)
Erfinder : Loch, Werner, Dr. Chem.
Berner Weg 34
D-6700 Ludwigshafen (DE)
Erfinder : Hartmann, Heinrich, Dr. Chem.
Weinheimer Strasse 46
D-6703 Limburgerhof (DE)
Erfinder : Immel, Günther, Dr. Chem.
Mozartstrasse 28
D-6940 Weinheim (DE)

## Verwendung wässriger Dispersionen zur Herstellung von Überzügen mittels Spritzauftrag

Die vorliegende Erfindung betrifft die Verwendung wäßriger, nichtionischer Dispersionen auf Basis von polyurethanbildenden Ausgangskomponenten zur Herstellung von Überzügen mittels Spritzauftrag, die bei 100 bis 200 °C eingebrannt werden.

Wäßrige Überzugsmittel, die korrosionsfeste Filme mit guten mechanischen Eigenschaften ergeben, sind bislang hauptsächlich unter den Elektrotauchlacken zu finden. Auf diesem Sektor gewinnen insbesondere die kationischen Bindemittel ständig an Interesse, da sie gegenüber den anionischen Elektrotauchlacken einen wesentlich besseren Korrosionsschutz ergeben. Aufgrund dieser Eigenschaften werden sie als Grundierungen für die Lackierung von Metallteilen eingesetzt.

Konventionell applizierbare, lösungsmittelarme wäßrige Lacksystemen, die sich zu Überzügen von hervorragendem Korrosionsschutz härten lassen und daher u. a. auch für Grundierungen eingesetzt werden können, sind bislang nicht bekannt. Aus der japanischen Patentanmeldung Nr. 50-070431 ist bekannt, daß sich korrosionsfeste Überzüge sehr gut aus OH-funktionellen Bindemitteln durch Vernetzung mit Polyisocyanaten herstellen lassen. Wegen der Wasserempfindlichkeit der Isocyanatgruppen können derartige Systeme jedoch nur in Form organischer Lösungs- oder als 2-Komponenten-Lacke appliziert werden. Im ersten Falle beträgt der Gehalt an organischen Lösungsmitteln mindestens 20 bis 30 Gew.% ; der Einsatz von 2-Komponenten-Lacken auf der anderen Seite bedeutet einen zusätzlichen technischen Aufwand.

Um zu entsprechenden Überzügen auf wäßriger Basis zu gelangen, ist man daher auf die Verwendung verkappter Isocyanate angewiesen. Die Hydrophilierung verkappter Isocyanate, welche deren Dispergierbarkeit bzw. Löslichkeit in Wasser bewirkt, ist aus der DE-OS 24 56 469 bekannt und beruht darauf, daß Polyisocyanate zunächst mit geeigneten Substanzen teilverkappt werden ; die endgültige Blockierung erfolgt dann mit hydrophilen Agentien, beispielsweise Polyäthermonoolen oder Alkalisalzen von Säuren mit freien OH- oder NH-Gruppen. Die hierbei resultierenden Dispersionen können in Kombination mit geeigneten wäßrigen Bindemitteln zu Überzügen verarbeitet werden. Abgesehen vom zusätzlichen technischen Aufwand, der durch den Hydrophilierungsschritt bedingt ist, hat dieses Verfahren den Nachteil, daß die in äquivalenten Mengen eingesetzten Hydrophilierungsmittel nach dem Einbrennen im Lackfilm verbleiben und somit Wasserfestigkeit und Korrosionsschutz herabsetzen.

In den DE-OS 25 38 484 und 26 33 396 werden teilverkappte Isocyanate mit OH-gruppenhaltigen Polymeren in ketonischer Lösung zur Reaktion gebracht. Im ersten Falle entstehen nach Kettenverlängerung mit Diaminen, Zugabe eines anionischen Emulgators und eines OH-Polyesters wasserverdünnbare Dispersionen mit noch beträchtlichem Restlösungsmittelgehalt. Der Verbleib des anionischen Emulgators im fertigen Lackfilm wirkt sich zudem negativ auf den Korrosionsschutz aus.

Im zweiten Falle werden nach Neutralisation mit Basen zwar lösungsmittelarme, wäßrige Überzugsmittel erhalten, die resultierenden anionischen Sekundärdispersionen zeigen jedoch erfahrungsgemäß keinen so guten Korrosionsschutz wie kationische oder gar nichtionische Dispersionen. Aufgabe der vorliegenden Erfindung war es, lösungsmittelarme wäßrige Überzugsmittel aufzuzeigen, die mittels Spritzauftrag applizierbar sind und nach Einbrennen bei 100 bis 200 °C sehr harte und elastische Filme mit wesentlich verbessertem Korrosionsschutz ergeben.

Es wurde nun gefunden, daß diese Aufgabe durch die erfindungsgemäß zu verwendenden wärmehärtbaren pigmentierbaren nichtionischen Sekundärdispersionen in sehr vorteilhafter Weise gelöst wird.

Gegenstand der vorliegenden Erfindung ist die Verwendung einer wäßrigen, nichtionischen Dispersion, bestehend aus

A. 30 bis 80 Gew.-% Wasser,

B. 70 bis 20 Gew.-% eines in A dispergierten Gemisches aus

    a) 10 bis 80 Gew.-% mindestens eines OH-gruppenhaltigen Polymeren mit einer OH-Zahl von 15 bis 600 und einer Säurezahl von 0 bis 60 und

    b) 90 bis 20 Gew.-% mindestens eines verkappten Polyisocyanates,

C. 0,1 bis 15 Gew.-% mindestens eines Polyvinylalkohols mit einem Restacetatgehalt von 5 bis 30 Molprozent und/oder Polyvinylpyrrolidon oder eines Vinylpyrrolidon/Vinylester-Copolymeren mit einem Vinylestergehalt von weniger als 35 Gew.-%, mit der Maßgabe, daß die Summe der unter A. bis C. genannten Prozentzahlen gleich 100 ist,

D. 10 bis 70 Gew.-%, bezogen auf B. Pigmenten und/oder Füllstoffen sowie gegebenenfalls in Mengen bis zu 10 Gew.-%, bezogen auf B. anderen in der Lacktechnologie üblichen Hilfsstoffen

zur Herstellung von Überzügen mittels Spritzauftrag, die bei 100 bis 200 °C eingebrannt werden.

Bevorzugt ist es, als hydroxylgruppenhaltiges Polymeres Ba) Polyester mit Hydroxylzahlen zwischen 25 und 400 und Molekulargewichten zwischen 500 und 5 000, aliphatische Polyäther mit Hydroxylzahlen zwischen 25 und 400 oder Polyacrylate mit Hydroxylzahlen zwischen 25 und 500 sowie als Dispergierhilfsmittel C. einen Polyvinylalkohol mit einem Restacetatgehalt von weniger als 35 Mol.% und/oder ein

Vinylpyrrolidon/Vinylester-Copolymeres mit einem Vinylestergehalt von weniger als 35 Gew.-% zu verwenden.

Besonders vorteilhaft ist die beanspruchte Verwendung der wäßrigen Überzugsdispersionen zur Herstellung von Spritzgrundierungen und/oder Spritzfüllern, insbesondere bei der Automobillackierung.

Ähnliche wäßrige, nichtionische Dispersionen auf Basis von polyurethanbildenden Ausgangskomponenten sind bereits als wäßrige Drahtlackdispersionen aus der DE-OS 25 37 207 bekannt. Wegen des für konventionell applizierbare Überzugsmittel im Vergleich zur Drahtlackierung geforderten völlig abweichenden Eigenschaftskataloges war jedoch in keinem Falle zu erwarten, daß ähnliche Dispersionen auch für die Herstellung von Überzügen mittels Spritzauftrag, die bei 100 bis 200 °C eingebrannt werden, eingesetzt werden können. Derartige Lacke müssen beispielsweise bei hoher Härte im Vergleich zu Drahtlacken eine beträchtlich höhere Elastizität z. B. für coil-coating aufweisen. Diese Anforderungen werden durch die erfindungsgemäß zu verwendenden Überzugsmittel sehr gut erfüllt.

Nicht vorherzusehen war außerdem, daß derartige Dispersionen in einem Arbeitsgang so aufgebracht werden können, daß nach dem Einbrennen störungsfreie Oberflächen bis 40 μm Dicke entstehen, da die für Drahtlacke erforderliche Schichtstärke von ca. 20 μm durch mehrfaches Auftragen sehr dünner Schichten erreicht wird.

Am wenigsten vorherzusehen war jedoch der hervorragende Korrosionsschutz derartiger Überzugsmittel, da aufgrund des hohen Gehaltes an hydrophilen Schutzkolloiden nicht einmal Wasserfestigkeit zu erwarten war. Hierauf beruht die besondere Bedeutung der vorliegenden Erfindung.

Zu den einzelnen Komponenten der erfindungsgemäß zu verwendenden wäßrigen Überzugsmittel ist folgendes zu sagen :

A. Die Komponente A. ist Wasser, das in einer Konzentration von 30 bis 80, vorzugsweise 50 bis 70 Gew.-% vorliegt.

B. Die Komponente B. ist ein im Wasser dispergiertes filmbildendes Bindemittelgemisch, das in den erfindungsgemäßen Überzugsmitteln in einer Menge von 70 bis 20, vorzugsweise 50 bis 30 Gew.-%, enthalten ist. Dieses Bindemittelgemisch besteht zu 10 bis 80 Gew.-%, vorzugsweise 30 bis 60 Gew.-%, aus einer Komponente a) und zu 90 bis 20 Gew.-%, vorzugsweise 70 bis 40 Gew.-%, aus einer Komponente b).

a) Die Komponente a) ist ein OH-gruppenhaltiges Polymeres mit einer OH-Zahl von 15 bis 600, vorzugsweise 50 bis 500, und einer Säurezahl von 0 bis 60, vorzugsweise 0 bis 25. Dieses Polymere kann sein

a1) ein Polyester mit einem mittleren Molekulargewicht von 500 bis 5 000 und einer Hydroxylzahl von 25 bis 400 aus aliphatischen und/oder aromatischen Dicarbonsäuren mit 4 bis 10 Kohlenstoffatomen, beispielsweise Bernsteinsäure, Glutarsäure, Adipinsäure, Pimelinsäure, Korksäure, Azelainsäure, Sebacinsäure, Cyclohexandicarbonsäure, Phthalsäure, Isophthalsäure oder Terephthalsäure bzw. deren Derivate, aliphatischen Diolen, wie Äthylenglykol, Diäthylenglykol, Triäthylenglykol, Polyäthylenglykole, Propandiol, Butandiol, Hexandiol, Neopentylglykol oder Hydroxypivalinsäureneopentylglykolester und gegebenenfalls höherwertigen Alkoholen, wie Trimethylolpropan, Glycerin, Erythrit, Pentaerythrit, Trimethylolbenzol oder Trishydroxyäthylisocyanurat in Mengen unter 5 Gew.-% als Vernetzer,

a2) ein aliphatischer oder araliphatischer Polyäther mit einer Hydroxylzahl zwischen 25 und 400 sowie einem mittleren Molekulargewicht zwischen 500 und 5 000, welcher durch Umsetzung von zwei- und/oder mehrwertigen Alkoholen, die auch unter a1) genannt sind, mit verschiedenen Mengen an Äthylen- und/oder Propylenoxid erhalten wird,

a3) ein OH-gruppenhaltiges Polyacrylat mit einer Hydroxylzahl von 25 bis 500 ; dieses kann eine Säurezahl von 0 bis 100, vorzugsweise 0 bis 25, und eine K-Wert nach Fikentscher (3 %ig in Aceton) von 10 bis 40, vorzugsweise 15 bis 30 aufweisen und folgende Monomeren einpolymerisiert enthalten :

α) 5 bis 100 Gew.-%, vorzugsweise 20 bis 40 Gew.-%, mindestens eines Hydroxy-$(C_2$-$C_4)$-alkylesters einer α, β-äthylenisch ungesättigen Carbonsäure, beispielsweise 2-Hydroxyäthyl- und Hydroxypropyl(meth-)acrylat sowie Butandiolmono(meth-)acrylat,

β) 0 bis 30 Gew.-%, vorzugsweise 0 bis 8 Gew.-%, mindestens einer α, β-äthylenisch ungesättigten Carbonsäure oder Dicarbonsäure, beispielsweise Acrylsäure, Methacrylsäure, Crotonsäure, Maleinsäure, Fumarsäure und Itaconsäure oder Dicarbonsäurehalbester von Monoalkanolen, wie Malein- und Fumarsäurehalbester mit $C_1$- bis $C_4$-Monoalkoholen, wobei Acrylsäure und Methacrylsäure bevorzugt sind,

γ) 0 bis 95 Gew.-%, vorzugsweise 60 bis 80 Gew.-%, mindestens einer äthylenisch ungesättigten an Carboxyl- und Hydroxylgruppen freien Verbindung, beispielsweise Vinylaromaten, wie Styrol und Vinyltoluol, Vinylester von Carbonsäuren mit 2 bis 18 Kohlenstoffatomen, wie Vinylacetat und Vinylpropionat, Vinyläther von Monoalkanolen mit 1 bis 18 Kohlenstoffatomen, wie Vinylmethyläther und Vinylisobutyläther, Ester der Acrylsäure oder Methacrylsäure mit $C_1$- bis $C_{12}$-Monoalkanolen, entsprechende Maleinsäure-, Furmarsäure- und Itaconsäurediester, (Meth-)acrylsäureamid, (Meth-)acrylsäurenitril sowie Gemische dieser Monomeren, wobei Styrol und (Meth-)acrylsäureester bevorzugt sind,

a4) ein OH-gruppenhaltiges Polyurethan mit einer Hydroxylzahl von 25 bis 600 aus aliphatischen und/oder aromatischen Diisocyanaten, das beispielsweise aus Tetramethylendiisocyanat, Hexamethylendiisocyanat, Isophorondiisocyanat, Diphenylmethandiisocyanat, Toluylendiisocyanat, Naphthylendiisocyanat, 4.4'-Diphenylätherdiisocyanat, sowie gegebenenfalls daraus hervorgehende Di- oder Trimere,

3

und aliphatischen Diolen, wie Äthylenglykol, Diäthylenglykol, Triäthylenglykol, Polyäthylenglykole, Propandiol, Butandiol, Hexandiol, Neopentylglykol oder Hydroxypivalinsäureneopentylglykolester, und gegebenenfalls höherwertigen Alkoholen, wie Trimethylolpropan, Glycerin, Pentaerythrit, Trimethylolbenzol oder Trishydroxyäthylisocyanurat erhältlich ist ;

a5) ein vollständig oder teilweise verseiftes Äthylen- und/oder Propylen-Vinylacetat-Copolymerisat mit einer OH-Zahl von 25 bis 600.

Es können auch Mischungen der Polymeren a1) bis a5) als Komponente a) eingesetzt werden.

b) Die Komponente b) ist ein aromatisches und/oder aliphatisches Polyisocyanat mit einem Isocyanatgehalt zwischen 5 und 30 %, beispielsweise vom Typ der unter a4) angeführten Di- und Polyisocyanate, das verkappt ist mit einem Phenol, wie Kresol oder Phenol selbst, einem ein- oder mehrwertigen Alkohol, beispielsweise Isopropanol, tert.-Butanol, Cyclohexanol, Äthylenglykol, Glycerin oder Trimethylolpropan, einem Oxim, wie Acetonoxim, Methyläthylketonoxim oder Cyclohexanonoxim, einer β-Dicarbonylverbindung, z. B. Malonsäurediäthylester, Acetessigsäureäthylester oder Acetylaceton, oder einer NH-aciden Verbindung, beispielsweise Caprolactam, 2-Piperidon, 2-Pyrrolidon, Phthalimid und -derivate oder Imidazol und -derivate. Die bevorzugten Verbindungen sind mit Trimethylolpropan halbseitig blockiertes Toluylendiisocyanat, dessen freie N = C = O-Gruppierungen mit Phenol oder Methyläthylketonoxim verkappt sind.

Der Gehalt des Bindemittelgemisches an Komponente b) beträgt 90 bis 20, vorzugsweise 70 bis 40 Gew.-%.

C. Die Komponente C. ist in den erfindungsgemäß zu verwendenden nichtionischen Sekundärdispersionen in Mengen von 0,1 bis 15 Gew.-%, vorzugsweise 1 bis 10 Gew.-%, besonders bevorzugt 3 bis 8 Gew.-%, enthalten. Als Komponente C. eignen sich Polyvinylpyrrolidon, Vinylpyrrolidon/Vinylester-Copolymere mit einem Vinylestergehalt von weniger als 35 Gew.-%, wie Copolymerisate aus Vinylpropionat bzw. -acetat und Vinylpyrrolidon, Polyvinylalkohol mit einem Restacetatgehalt von 5 bis 30 Mol.-%, und/oder vorzugsweise ein Vinylpyrrolidon-Vinylpropionat-Copolymeres mit einem Vinylestergehalt von 5 bis 30 Gew.-%.

Die erfindungsgemäß zu verwendenden Dispersionen können in untergeordneten Mengen als zusätzliche Hilfsstoffe gegebenenfalls nichtionische, in besonderen Fällen auch ionische Emulgatoren und/oder Neutralisationsmittel enthalten. Die bevorzugten Verbindungen sind längerkettige Alkohole oder Phenole unterschiedlichen Äth- oder Propoxylierungsgrades. Mit derartigen Hilfsstoffen werden feinteiligere Dispersionen erhalten.

D. Bei der Komponente D. handelt es sich um die in der Lacktechnologie üblichen Pigmente und/oder Füllstoffe, die in Mengen von 10 bis 70 Gew.-%, bezogen auf B., im Bindemittel dispergiert sind. Bevorzugte Stoffe sind beispielsweise Rutil, Ruß, Talkum, Zinkoxid, verschiedene Eisenoxide oder organische Pigmente. Gegebenenfalls sind auch noch andere in der Lacktechnologie übliche Hilfsstoffe, wie Verlaufmittel, Netzmittel, Entschäumer, Antithixotropiermittel, Härtungskatalysatoren, Elastifizierungsmittel, organische Cosolventien und zusätzliche Vernetzer, die nicht unter B. genannt sind, in Mengen bis 10 Gew.-%, bezogen auf B., in den erfindungsgemäß zu verwendenden Dispersionen enthalten.

Die Herstellung der erfindungsgemäß zu verwendenden wäßrigen Überzugsmittel erfolgt, wie in der DE-OS 25 37 207 beschrieben, im allgemeinen nach zwei bevorzugten Verfahren. Im ersten Falle werden die Ausgangskomponenten a) und b) in einem inerten organischen Lösungsmittel mit einem Siedepunkt unterhalb von 150 °C, insbesondere unterhalb von 105 °C, aufgelöst bzw. die von der Herstellung her in einem entsprechenden inerten organischen Lösungsmittel vorliegenden Ausgangskomponenten vermischt. Geeignete Lösungsmittel sind beispielsweise Tetrahydrofuran, Dioxan, Aceton, Methyläthylketon, Äthylacetat, Methylenchlorid, Xylole, Toluol, Benzol oder Äthylglykolacetat, bevorzugt sind Methyläthylketon, Methylenchlorid, Tetrahydrofuran und Äthylacetat.

Die entstandene Lösung wird anschließend mit einer Lösung des Dispergierhilfsmittels C. in Wasser vermischt. Aus der resultierenden Dispersion wird das organische Lösungsmittel unter starkem Rühren unter Normaldruck oder im Vakuum, gegebenenfalls auch als azeotropes Gemisch mit Wasser, destillativ entfernt. Die entstehenden nichtionischen wäßrigen Sekundärdispersionen weisen Feststoffgehalte von 20 bis 70 % auf. Der mittlere Teilchendurchmesser liegt unter 5 μm, der Restlösungsmittelgehalt zwischen 0 und 10 Gew.-%, bezogen auf Gesamtrezeptur.

Bei dem anderen bevorzugten Herstellungsverfahren gemäß DE-OS 25 37 207 wird zunächst ebenfalls, wie oben beschrieben, eine Lösung der Ausgangskomponenten in einem inerten organischen Lösungsmittel hergestellt. Dieses soll einen Gefrierpunkt zwischen + 30 und − 50 °C haben. In Frage kommen beispielsweise Xylole, Eisessig, Cyclohexan, Äthylenbromid, Neopentylalkohol, tert.-Butanol oder Dioxan ; bevorzugt ist Dioxan. Nach gegebenenfalls vollständigem oder teilweisem Zusatz einer wäßrigen Lösung des Dispergierhilfsmittels C. wird die resultierende Dispersion einer Gefriertrocknung unterworfen.

Das getrocknete Produkt fällt in Form von lockeren, schaumartigen Aggregaten an, die leicht zu einem lockeren Pulver mit einer mittleren Teilchengröße zwischen etwa 5 und 200 μm zerfallen. Dieses wird dann, gegebenenfalls zusammen mit Hilfsmittel, in Wasser dispergiert, wobei durch geeignete Scherung eine Teilchenverkleinerung auf unter 5 μm erzielt wird.

Neben diesen bevorzugten Herstellungsweisen können die erfindungsgemäßen Dispersionen auch

4

durch trockenes Vermahlen der festen Ausgangsstoffe, Dispergieren in Wasser und anschließendes Naßvermahlen hergestellt werden. Man kann die Ausgangsstoffe auch in geeigneten Lösungsmitteln auflösen, durch Zugabe von Nichtlösern ausfällen, Waschen und dann in Wasser dispergieren.

Die Zusatzstoffe D. können bereits bei der Herstellung der erfindungsgemäßen Dispersionen zugegen sein. Eine andere Möglichkeit besteht in deren nachträglicher Zugabe. So können beispielsweise Pigmente und Füllstoffe, gegebenenfalls zusammen mit Hilfsmitteln unter Anwendung von in der Lacktechnologie üblichen Methoden in die fertigen Dispersionen eingearbeitet werden.

Die fertigen Lacke können gegebenenfalls zur Erzielung optimaler Verarbeitungsviskosität mit Wasser, das eventuell weiteres Dispergierhilfsmittel C. enthält, verdünnt werden.

Die erfindungsgemäß zu verwendenden wärmehärtbaren, nichtionischen wäßrigen Sekundärdispersionen zeichnen sich durch hohe Lagerstabilität aus. Sie sind arm an organischen Lösungsmitteln und lassen sich mit gutem Erfolg als umweltfreundliche flächige Beschichtungsmittel, besonders für die Lackierung von Metallen, einsetzen. Ihre Verarbeitung erfolgt vorzugsweise durch Lackspritzen nach den verschiedenen Ausführungsformen, sei es mit Luftdruckspritzpistolen oder auf einer Elektrostatikanlage. Die Einbrenntemperaturen betragen im allgemeinen 100 bis 200 °C, vorzugsweise 150 bis 190 °C, die Einbrennzeiten maximal 30 Minuten.

Mit den erfindungsgemäß zu verwendenden wäßrigen Überzugsmitteln können in einem einzigen Arbeitsgang kochblasenfreie Beschichtungen von bis zu 40 μm Dicke erhalten werden.

Als zu beschichtende Substrate sind besonders Metalle geeignet. Von den zahlreichen zur Verfügung stehenden Materialien sind gebonderte Bleche bevorzugt, da dort optimale Haftung erzielt wird. Die erhaltenen Überzüge zeichnen sich durch sehr hohe Härte, Elastizität sowie gute Washlaugenfestigkeit aus. Die hervorstechendste Eigenschaft der erfindungsgemäß zu verwendenden Wasserlacke ist jedoch der ausgezeichnete Korrosionsschutz. Die auf Bonderblechen erhaltenen Überzüge zeigen beim Salzsprühtest gemäß Din 50 021 keine Veränderung nach 10 Tagen. Die Beschichtungsmittel eignen sich also insbesondere als konventionell applizierbare Grundierungen. Die Haftung anderer Überzüge auf diesen Untergründen ist ebenfalls sehr gut.

Neben einem Korrosionsschutz sind bei den erfindungsgemäß zu verwendenden Überzugsmitteln auch hohe Pigmentierbarkeit sowie bei den gehärteten Beschichtungen gute Schleifbarkeit gewährleistet. Sie können daher als wäßrige Spritzfüller bei der Automobillackierung eingesetzt werden. Schließlich ist auch ein Einsatz als Decklack möglich.

Ein weiteres Einsatzgebiet für die erfindungsgemäß zu verwendenden Wasserlacke ist das coil-coating. Hierfür erfüllen sie die wichtigsten Anforderungen voll und ganz : hohe Härte, sehr hohe Elastizität, hohe Wasserfestigkeit und guter Korrosionsschutz.

Folgende Beispiele sollen die vorliegende Erfindung näher charakterisieren, ohne diese einzuschränken. Die angegebenen Teile und Prozente beziehen sich, soweit nicht anders angegeben, auf das Gewicht.

Beispiel 1

a) Herstellung der nichtionischen wäßrigen Sekundärdispersion

In einem Rührkolben mit Destillationsaufsatz werden 100 Teile eines Polyesters aus 43,25 Teilen Adipinsäure, 3,25 Teilen Phthalsäureanhydrid, 22,7 Teilen Trimethylolpropan und 30,8 Teilen Propandiol-1,2, mit einer Hydroxylzahl von 215, sowie 120 Teile eines mit Phenol verkappten Polyisocyanats aus 1 Mol Trimethylolpropan und 3 Mol Toluylendiisocyanat (mit einem Isocyanatgehalt von 13,4 %) in 220 Teilen Methylenchlorid gelöst. Die Lösung wird danach unter starkem Rühren mit 15 Teilen Äthylglykolacetat als Verlaufmittel, 220 Teilen einer 5 %igen wäßrigen Lösung eines Polyvinylalkohols mit einer Viskosität von 5 m-Pa-s (in 2 %iger wäßriger Lösung), einer Hydroxylzahl von 653 und einem Restacetatgehalt von 27 % sowie 7 Teilen einer 90 %igen wäßrigen Lösung eines Emulgators aus 1 Mol eines $C_{12}$- bis $C_{13}$-Alkohols und 8 bis 9 Mol Äthylenoxid unter starkem Rühren (Rührgeschwindigkeit 450 Upm) versetzt. Es entsteht eine Emulsion. Die Innentemperatur des Kolbens wird innerhalb von 2 Stunden bis auf 85 °C gesteigert. Ca. 240 Teile Lösungsmittel destillieren ab. Die Dispersion wird dann abgekühlt und über Nacht stehengelassen.

Feststoffgehalt : 47 %

b) Herstellung eines Lackes

Die Dispersion wird nach leichtem Verdünnen mit einer 5 %igen wäßrigen Lösung eines Copolymerisates aus 70 Teilen Vinylpyrrolidon und 30 Teilen Vinylpropionat als Dispergierhilfsmittel — 30 %ig (bezogen auf fest) mit einem Gemisch aus 97 Teilen Titandioxid und 3 Teilen Ruß auf dem Rollstuhl pigmentiert. Der resultierende Graulack wird mit einer 5 %igen wäßrigen Lösung des oben erwähnten Dispergiermittels auf Spritzviskosität (Fordbecher DIN 4 : 35 s) verdünnt (Feststoffgehalt : 35 %), auf Bonderbleche gespritzt und die Beschichtungen nach 5-minütigem Ablüften bei Raumtemperatur 30 Minuten bei 170 °C eingebrannt.

| | |
|---|---|
| Schichtdicke : | 20 bis 25 µm |
| Bleistifthärte : | 1 H |
| Erichsentiefung : | 10 mm |
| Schlagtiefung : | 160 ip |
| Salzsprühtest (DIN 50 021) : | kein Angriff |

## Beispiel 2

### a) Herstellung der Sekundärdispersion

375 Teile eines Polyesters aus 6,8 Teilen Phthalsäureanhydrid, 43 Teilen Adipinsäure, 13,8 Teilen Trimethylolpropan und 36,4 Teilen Propandiol-1.2, mit einer Hydroxylzahl von 165, sowie 621 Teile des Polyisocyanats nach Beispiel 1a werden in 875 Teilen Methyläthylketon gelöst. Die Lösung wird danach unter starkem Rühren mit 52 Teilen Äthylglykolacetat, 996 Teilen einer 5 %igen wäßrigen Lösung des Dispergiermittels nach Beispiel 1a und 33 Teilen einer 90 %igen wäßrigen Lösung des Emulgators nach Beispiel 1a versetzt. Die Innentemperatur des Kolbens wird innerhalb von 3 Stunden auf 95 °C gesteigert. Dabei werden insgesamt ca. 950 Teile Flüssigkeit abdestilliert. Die Dispersion wird abgekühlt und über Nacht stehengelassen.

Feststoffgehalt : 46 %.

### b) Herstellung eines Lackes

Die Dispersion wird zu 10 % (bezogen auf fest) mit dem Pigmentgemisch nach Beispiel 1b, wie dort beschrieben, pigmentiert. Der resultierende Graulack wird dann mit einer 5 %igen wäßrigen Lösung des Dispergiermittels nach Beispiel 1b auf Spritzviskosität (Fordbecher DIN 4 : 35 s) verdünnt (Feststoffgehalt : 37 %). Wie dort beschrieben, werden Beschichtungen hergestellt.

| | |
|---|---|
| Schichtdicke : | 21 bis 26 µm |
| Bleistifthärte : | 3 H |
| Pendelhärte : | 143 s |
| Erichsentiefung : | 8,8 mm |
| Schlagtiefung : | 160 ip |
| Salzsprühtest (DIN 50 021) : | kein Angriff. |

## Beispiel 3

### a) Herstellung der Sekundärdispersion

Aus 100 Teilen eines Polyesters aus 45,75 Teilen Phthalsäureanhydrid und 54,25 Teilen Trimethylolpropan, mit einer Hydroxylzahl von 265, sowie 132 Teilen einer 80 %igen Lösung eines mit Methyläthylketonoxim verkappten, eine Biuretgruppierung enthaltenden Polyisocyanats auf Basis von Hexamethylendiisocyanat (mit einem Isocyanatgehalt von 12 %) in Äthylacetat wird nach Zugabe von weiteren 180 Teilen Äthylacetat eine homogene Lösung bereitet. Die Lösung wird danach unter starkem Rühren mit 14 Teilen Äthylglykolacetat, 205 Teilen einer 5 %igen wäßrigen Lösung des Dispergiermittels nach Beispiel 1a und 7 Teilen einer 90 %igen wäßrigen Lösung des Emulgators nach Beispiel 1a versetzt. Die Innentemperatur des Kolbens wird innerhalb von 3 Stunden auf 95 °C gesteigert. Dabei werden insgesamt ca. 220 Teile Lösungsmittel abdestilliert. Die Dispersion wird abgekühlt und über Nacht stehengelassen.

Feststoffgehalt : 50 %.

### b) Herstellung eines Lackes

Die Dispersion wird, wie im Beispiel 1b beschrieben, zu 40 % (bezogen auf fest) mit Titandioxid pigmentiert. Der entstandene Weißlack wird dann mit einer 5 %igen wäßrigen Lösung des Dispergiermittels nach Beispiel 1b auf Spritzviskosität (Fordbecher DIN 4 : 30 s) verdünnt (Feststoffgehalt : 32 %). Wie dort beschrieben, werden Beschichtungen hergestellt. Die Überzüge werden nach 5-minütigem Ablüften bei Raumtemperatur 30 Minuten bei 190 °C eingebrannt.

| | |
|---|---|
| Schichtdicke : | 25 bis 30 µm |
| Bleistifthärte : | F-H |
| Erichsentiefung : | 9,8 mm |
| Schlagtiefung : | 160 ip |
| Salzsprühtest (DIN 50 021) : | kein Angriff |

## Beispiel 4

### a) Herstellung der Sekundärdispersion

6

100 Teile eines durch in der Lacktechnik übliche Lösungspolymerisation 65 %ig in Äthylacetat hergestellten Acrylatharzes aus 20 Teilen Butandiolmonoacrylat, 55 Teilen tert.-Butylacrylat und 25 Teilen Styrol, mit einem K-Wert (nach Fikentscher) von 16 und einer Hydroxylzahl von 80, werden mit 44,1 Teilen einer 70 %igen Lösung eines mit Methyläthylketonoxim verkappten Polyisocyanats aus 1 Mol Trimethylolpropan und 3 Mol Toluylendiisocyanat (mit einem Isocyanatgehalt von 13 %) in Äthylacetat vermischt. Die resultierende Mischung wird mit 70 Teilen Äthylacetat verdünnt. Die homogene Lösung wird anschließend unter starkem Rühren mit 6 Teilen Äthylglykolacetat, 134 Teilen einer 5 %igen wäßrigen Lösung des Dispergiermittels nach Beispiel 1a und 4 Teilen einer 90 %igen wäßrigen Lösung des Emulgators nach Beispiel 1a versetzt. Die Innentemperatur wird innerhalb von 3 Stunden auf 90 bis 95 °C gesteigert. Dabei werden insgesamt ca. 120 Teile Lösungsmittel entfernt. Die Dispersion wird abgekühlt und über Nacht stehengelassen.

Feststoffgehalt : 42 %.

b) Herstellung eines Lackes

Die Dispersion wird, wie im Beispiel 1b beschrieben, zu 15 % (bezogen auf fest) mit einer Mischung aus 70 Teilen Titandioxid, 25 Teilen Talkum und 5 % Ruß pigmentiert. Der resultierende Lack wird dann mit einer 5 %igen wäßrigen Lösung des Dispergiermittels nach Beispiel 1b auf Spritzviskosität (Fordbecher DIN 4 : 35 s) verdünnt (Feststoffgehalt : 40 %). Wie dort angegeben, werden Beschichtungen hergestellt. Die Überzüge werden nach 5-minütigem Ablüften bei Raumtemperatur 30 Minuten bei 180 °C eingebrannt.

| | |
|---|---|
| Schichtdicke : | 25-30 μm |
| Bleistifthärte : | F-2H |
| Erichsentiefung : | 9,2 mm |
| Schlagtiefung : | 160 ip |
| Salzsprühtest (DIN 50 021) : | kein Angriff. |

**Ansprüche**

1. Verwendung einer wäßrigen, nichtionischen Dispersion, bestehend aus

A. 30 bis 80 Gew.-% Wasser,
B. 70 bis 20 Gew.-% eines in A. dispergierten Gemisches aus
    a) 10 bis 80 Gew-% mindestens eines OH-gruppenhaltigen Polymeren mit einer OH-Zahl von 15 bis 600 und einer Säurezahl von 0 bis 60 und
    b) 90 bis 20 Gew.-% mindestens eines verkappten Polyisocyanates,
C. 0,1 bis 15 Gew.-% mindestens eines Polyvinylalkohols mit einem Restacetatgehalt von 5 bis 30 Molprozent und/oder Polyvinylpyrrolidon oder eines Vinylpyrrolidon/Vinylester-Copolymeren mit einem Vinylestergehalt von weniger als 35 Gew.-%, mit der Maßgabe, daß die Summe der unter A. und C. genannten Prozentzahlen gleich 100 ist,
D. 10 bis 70 Gew.-%, bezogen auf B. Pigmenten und/oder Füllstoffen sowie gegebenenfalls in Mengen von bis zu 10 Gew.-%, bezogen auf B. anderen in der Lacktechnologie üblichen Hilfsstoffen,

zur Herstellung von Überzügen mittels Spritzauftrag, die bei 100 bis 200 °C eingebrannt werden.

2. Verwendung nach Anspruch 1, dadurch gekennzeichnet, daß als Komponente Ba) ein Polyester aus aliphatischen und/oder aromatischen Dicarbonsäuren, aliphatischen Diolen und gegebenenfalls höherwertigen Alkoholen verwendet wird, der eine Hydroxylzahl zwischen 25 und 400 und ein Molekulargewicht zwischen 500 und 5 000 aufweist.

3. Verwendung nach Anspruch 1, dadurch gekennzeichnet, daß als Komponente Ba) ein aliphatischer Polyäther verwendet wird, der eine Hydroxylzahl zwischen 25 und 400 aufweist.

4. Verwendung nach Anspruch 1, dadurch gekennzeichnet, daß als Komponente Ba) ein hydroxylgruppenhaltiges Polyacrylat mit einer Hydroxylzahl von 25 bis 500 verwendet wird.

5. Verwendung nach einem der vorhergehenden Ansprüche zur Herstellung von Spritzgrundierungen und/oder Spritzfüllern, vorzugsweise für die Automobillackierung.

**Claims**

1. Use of an aqueous nonionic dispersion consisting of

A. 30 to 80 % by weight of water,
B. 70 to 20 % by weight of a mixture, dispersed in A., of

a) 10 to 80 % by weight of at least one hydroxyl-containing polymer having a hydroxy number of 15 to 600 and an acid number of 0 to 60, and

b) 90 to 20 % by weight of at least one blocked polyisocyanate,

C. 0,1 to 15 % by weight of at least one polyvinyl alcohol having a residual acetate content of 5 to 30 mole % and/or of polyvinylpyrrolidone or of a vinylpyrrolidone/vinyl ester copolymer having a vinyl ester content of less than 35 % by weight, with the proviso that the sum of the percentages specified under A. to C. is 100, and

D. 10 to 70 % by weight, based on B., of pigments and/or fillers and, if desired, up to 10 % by weight, based on B., of other auxiliaries usually used in surface coatings technology,

for the production, by spraying, of coatings which are baked at from 100 to 200 °C.

2. Use as claimed in claim 1, wherein there is used as component Ba) a polyester derived from aliphatic and/or aromatic dicarboxylic acids, aliphatic diols and, if desired, higher hydric alcohols, and having a hydroxy number of 25 to 400 and a molecular weight of 500 to 5 000.

3. Use as claimed in claim 1, wherein there is used as component Ba) an aliphatic polyether having a hydroxy number of 25 to 400.

4. Use as claimed in claim 1, wherein there is used as component Ba) a hydroxyl-containing polyacrylate having a hydroxy number of 25 to 500.

5. Use as claimed in any of the preceding claims for the production of spray primers and/or spray fillers, preferably for automobile finishing.

## Revendications

1. Utilisation pour la préparation de revêtements, par pulvérisation et qui sont cuits entre 100 et 200 °C, d'une dispersion aqueuse non ionique, constituée de :

A. 30 à 80 % en poids d'eau

B. 70 à 20 % en poids d'un mélange, dispersé dans A., de :

a) 10 à 80 % en poids d'au moins un polymère à groupes OH d'un indice OH de 15 à 600 et d'un indice d'acide de 0 à 60 et

b) 90 à 20 % en poids d'au moins un polyisocyanate masqué,

C. 0,1 à 15 % en poids d'au moins un alcool polyvinylique d'une teneur en acétate restant de 5 à 30 % (moles) et/ou de polyvinylpyrrolidone ou d'un copolymère vinylpyrrolidone/vinylester d'une teneur en vinylester d'au moins 35 % en poids, sous réserve que la somme des pourcentages indiqués sous A. à C. soit égale à 100,

D. 10 à 70 % en poids, rapportés à B., de pigments et/ou charges ainsi qu'éventuellement, en proportions allant jusqu'à 10 % en poids. rapportées à B. d'autres auxiliaires usuels dans la technique des peintures.

2. Utilisation selon la revendication 1, caractérisée par le fait qu'on utilise, comme composant Ba) un polyester d'acides dicarboxyliques aliphatiques et/ou aromatiques, diols aliphatiques et éventuellement alcools de valeur élevée, qui possède un indice hydroxyle compris entre 25 et 400 et un poids moléculaire compris entre 500 et 5 000.

3. Utilisation selon la revendication 1, caractérisée par le fait qu'on utilise, comme composant Ba) un polyéther aliphatique qui possède un indice hydroxyle compris entre 25 et 400.

4. Utilisation selon la revendication 1, caractérisée par le fait qu'on utilise, comme composant Ba), un polyacrylate à groupes hydroxyle d'un indice hydroxyle de 25 à 500.

5. Utilisation selon l'une des revendications précédentes, pour la préparation de couches de fond pulvérisées et/ou de charges pulvérisées, de préférence pour la peinture d'automobiles.